(19) Europäisches Patentamt
European Patent Office
Office européen des brevets

(11) Veröffentlichungsnummer: **0 012 357**
**A1**

# (12) EUROPÄISCHE PATENTANMELDUNG

(21) Anmeldenummer: **79104946.3**

(22) Anmeldetag: **05.12.79**

(51) Int. Cl.³: **C 08 L 55/02**

(30) Priorität: **12.12.78 DE 2853574**

(43) Veröffentlichungstag der Anmeldung: **25.06.80**
**Patentblatt 80/13**

(84) Benannte Vertragsstaaten: **BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Müller, Eberhard, Dr.,**
**Hermann-Hesse-Strasse 7, D-5090 Leverkusen 1 (DE)**
Erfinder: **Ott, Karl-Heinz, Dr., Paul-Klee-Strasse 54,**
**D-5090 Leverkusen (DE)**
Erfinder: **Pampus, Gottfried, Dr.,**
**Friedrich-Weskott-Strasse 14, D-5090 Leverkusen 1 (DE)**
Erfinder: **Schnetger, Jochen, Dr., Im Obstgarten 9,**
**D-8990 Lindau/Bodolz (DE)**
Erfinder: **Beck, Manfred, Dr., Auf dem Krahwinkel 5,**
**D-5068 Odenthal (DE)**
Erfinder: **Serini, Volker, Dr., Scheiblerstrasse 81,**
**D-4150 Krefeld (DE)**

(54) **Wärmestandfeste thermoplastisch-elastomere Polymermischung.**

(57) Wärmestandfeste thermoplastisch-elastomere Polymermischung aus einem Pfropfpolymerisat aus einem vernetzten Kautschuk und mindestens teilweise aufgepfropften Einheiten von Acrylnitril, einem Vinylaromaten, einem Alkylmethacrylat oder deren Gemischen und einem aromatischen Polycarbonat, von dem bis zu 50 Gew.-% durch Polystyrol, Polymethylmethacrylat oder Styrol-Acrylnitril-Copolymere ersetzt sein können.

EP 0 012 357 A1

BAYER AKTIENGESELLSCHAFT
Zentralbereich
Patente, Marken und Lizenzen

5090 Leverkusen, Bayerwerk
Kb/bc

## Wärmestandfeste thermoplastisch-elastomere Polymermischung

Die vorliegende Anmeldung betrifft wärmestandfeste thermoplastisch-elastomere Polymermischungen aus

A einem Pfropfpolymerisat aus einem vernetzten Kautschuk als Pfropfbasis und einem Thermoplastanteil von mindestens teilsweise aufgepfropfen Einheiten von Acrylnitril, einem Vinylaromaten, einem Alkylmethacrylat oder deren Gemischen und

B einem aromatischen Polycarbonat, das bis zu 50 Gew.-% durch Polystyrol, Polymethylmethacrylat oder Styrol-Acrylnitril-Copolymere ersetzt sein kann.

Bereits bekannte, thermoplastisch verarbeitbare Elastomere sind z.B. Styrol-Butadien-Dreiblockcopolymere (US-Patent 3 265 765). Sie können u.a. entweder durch Umsetzung von Dilithium-Polybutadienen mit Styrol oder durch Verknüpfen von Polystyrol-Polybutadienyl-Lithium-Diblockpolymeren mit geeigneten di- oder mehrfunktionellen Verbindungen erhalten werden.

Unterhalb der Glastemperatur des Polystyrols zeigen diese Polymere technologische Eigenschaften, die mit denen konventionell hergestellter Kautschukvulkanisate vergleichbar sind. Sie besitzen bei Raumtemperatur ein gutes elastisches Verhalten und hohe Festigkeitswerte bei variablen Härte-Einstellungen. Bei Temperaturen oberhalb des Glasübergangs von Polystyrol befinden sich diese Produkte in einem schmelzähnlichen Zustand und lassen sich wie unvulkanisierte Kautschuke verarbeiten, wobei der Übergang vom kautschuk- zum vulkanisatähnlichen Zustand reversibel ist. Morphologisch gesehen bestehen diese Polymeren aus einer Kautschukmatrix, in welche die damit chemisch verknüpften Polystyroleinheiten ("glassy balls") eingelagert sind.

Ein wesentlicher Nachteil derartiger Systeme besteht in ihrer geringen Wärmestandfestigkeit, die durch eine gewisse Teilverträglichkeit der Polystyroleinheiten mit der Polybutadienmatrix bedingt ist. So beginnen z.B. die Polystyrolblöcke der Dreiblockelastomeren bereits oberhalb von 60°C zu erweichen. Außerdem muß bei den üblichen Herstellungsverfahren äußerst sorgfältig gearbeitet werden, da die Festigkeiten z.B. bereits durch geringe Anteile an Polystyrol-Polybutadien-Diblöcken, die durch Abbruchreaktionen mit Verunreinigungen leicht entstehen können, erheblich abfallen.

Bekannt sind außerdem thermoplastische Elastomere, die durch Abmischung von isotaktischem Polypropylen oder Polyethylen mit mehr oder weniger stark vernetzten Ethylen-Propylen-Dien-Terpolymeren oder durch Abmischung von modifiziertem Polyisobutylen mit Polyethylen hergestellt werden (US-Patente 3 758 643, 3806 558, 3 835 201 und 3 862 106).

Man nimmt an, daß diese Produkte ihre spezifischen Eigenschaften dadurch erhalten, daß sich Thermoplast- und Kautschukanteile durch Verknäuelungen oder Verhakungen miteinander verknüpfen. Bei diesen Produkten ist die Festigkeits-Bruchdehnungs-Relation ungünstig, auch haben sie für bestimmte Anwendungen zu niedrige Elastizität bei tiefen Temperaturen.

Weiterhin bekannt sind Pfropfpolymerisate aus vernetzten Dienkautschuken und Styrol, Styrol/Acrylnitril und Styrol/Acrylnitril/Acrylestern, die eine kugelförmige Verteilung von Kautschukteilchen in einer Harzmatrix aufweisen. Sie zeigen jedoch eine ungünstige Festigkeits-Bruchdehnungs-Relation, haben eher thermoplastische als elastische Eigenschaften und werden zur Schlagfestmachung von Kunststoffen wie Polystyrol, Polycarbonat oder Styrol-Acrylnitril-Copolymerisaten verwendet.

Es wurde nun gefunden, daß Polymermischungen aus den nachstehend beschriebenen Kautschukpfropfpolymerisaten und aromatischen Polycarbonaten, die teilweise durch andere thermoplastische Polymere ersetzt sein können, thermoplastische Elastomere mit ausgezeichneten Wärmestandfestigkeiten darstellen.

Gegenstand der Erfindung sind thermoplastisch-elastomere Polymermischungen aus

A 100 Gew.-Teilen eines Pfropfpolymerisates aus

1. 55 bis 70 Gew.-% mindestens eines hochvernetzten Kautschuks mit einem Gelgehalt von 80 bis 100 Gew.-% als Pfropfbasis und

2. 30 bis 45 Gew.-% eines Thermoplastanteils aus polymerisierten Einheiten von Acrylnitril, einem Vinylaromaten, einem Alkylmethacrylat oder deren Gemischen, die zu 10 bis 90 Gew.-% aufgepfropft sind, wobei die Summe von 1 und 2 100 Gew.-% beträgt, und

B 5 bis 30 Gew.-Teilen mindestens eines aromatischen Polycarbonats, dessen lineare Ketten zu mindestens 50 % aus Struktureinheiten der Formel 1 bestehen

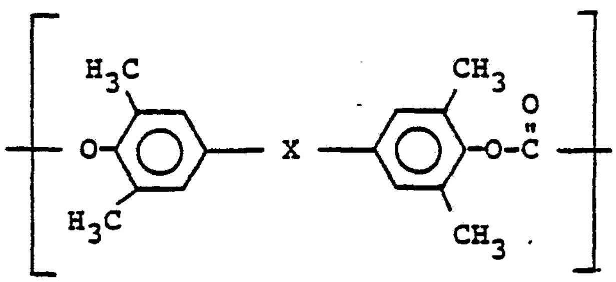

(1)

in der X für $C_1$-$C_5$-Alkylen oder -Alkyliden steht, wobei bis zu 50 Gew.-% des Polycarbonats durch Polystyrol, Polymethylmethacrylat oder Styrol-Acrylnitril-Copolymere ersetzt sein können.

Vorzugsweise enthalten die erfindungsgemäßen Polymermischungen auf 100 Gew.-Teile des Pfropfpolymerisates A 10 bis 20 Gew.-Teile der thermoplastischen Komponente B.

Die Pfropfpolymerisate A können nach an sich bekannten Verfahren hergestellt werden, z.B. durch radikalisch initiierte Pfropfung der Monomeren in Emulsion.

Als Pfropfgrundlage werden Naturkautschuke und Synthesekautschuke verwendet, die zu mindestens 50 Gew.-% hochvernetzt sind. Geeignete Synthesekautschuke sind Homo- und Copolymerisate von gegebenenfalls halogensubstituierten konjugierten Dienen mit 4 bis 8 Kohlenstoffatomen wie Butadien, Isopren und Chloropren und deren Copolymerisate mit Styrol oder Acrylnitril. Beispielhaft seien genannt: Polybutadien, Polyisopren, Polychloropren, Acrylnitril-Butadien- und Styrol-Butadien-Copolymere. Bevorzugt sind Polybutadien, Gemische von Polybutadien mit Acrylnitril-Butadien- und Styrol-Butadien-Copolymeren oder solche Gemische aus 50 bis 90 Gew.-% eines hochvernetzten Kautschuks und 10 bis 50 Gew.-% eines unvernetzten oder teilvernetzten Kautschuks.

Unter hochvernetzten Kautschuken werden solche mit einem Gelgehalt zwischen 80 und 100 Gew.-% und einem Quellindex kleiner als 20 verstanden. Unvernetzte Kautschuke sind solche mit einem Gelgehalt zwischen 0 und 5 Gew.-%, unter teilvernetzten Kautschuken werden solche mit Gelgehalten zwischen 5 und 80 Gew.-% verstanden. Der gewünschte Vernetzungsgrad der Kautschuke kann in an sich bekannter Weise eingestellt werden, z.B. durch Einwirkung radikalbildender Substanzen oder energiereicher Strahlung. Die als Pfropfgrundlage verwendeten Kautschuke werden vorzugsweise in Form ihrer Latices eingesetzt und können Teilchengrößen zwischen 50 und 800 nm haben.

Bevorzugt als Pfropfgrundlage sind Latices von Gemischen aus Polybutadien (Teilchengröße 200 bis 600 nm, Gelgehalt größer als 80 Gew.-%, Quellindex kleiner als 20) und Styrol-Butadien-Copolymeren (Styrolgehalt 5 bis 30 Gew.-%, Gelgehalt 0 bis 80 Gew.-%, Teilchengröße 100 bis 400 nm) oder Acrylnitril-Butadien-Copolymeren (Acrylnitrilgehalt 10 bis 40 Gew.-%, Gelgehalt 0 bis 80 Gew.-%, Teilchengröße 50 bis 400 nm). Die Latices sollen dabei einen Feststoffgehalt von 50 bis 90 Gew.-% Polybutadien und 10 bis 50 Gew.-% Styrol-Butadien- und/oder Acrylnitril-Butadien-Copolymeren besitzen.

Als Pfropfmonomere außer Acrylnitril sind geeignet: Vinylaromaten wie Styrol und $C_1$-$C_4$-Alkylderivate des Styrols mit insgesamt 8 bis 12 Kohlenstoffatomen, z.B. $\alpha$-Methylstyrol und p-Methylstyrol. Geeignete Alkylmethacrylate sind Ester der Methacrylsäure mit aliphatischen $C_1$-$C_4$-Alkoholen wie Methyl-, Ethyl-, n-Propyl- und Isobutylmethacrylat. Bevorzugt sind Acrylnitril, Styrol, Methylmethacrylat oder deren Gemische.

Die Menge des thermoplastischen Anteils im Pfropfpolymerisat A beträgt 30 bis 45, vorzugsweise 35 bis 40 Gew.-%, wovon 10 bis 90, vorzugsweise 30 bis 80 Gew.-%, aufgepfropft sind. Die Pfropfäste haben einen L-Wert (in Dimethylformamid bei 25°C) von 20 bis 120, vorzugsweise von 40 bis 80 (der L-Wert entspricht $\eta_{spez.}/c$ für c = 5 g/l).

Bei den als Komponente B eingesetzten Polycarbonaten handelt es sich um aromatische Polycarbonate, deren lineare Ketten zu mindestens 50 % aus Struktureinheiten der Formel 1 bestehen, worin X = $C_1$-$C_5$-Alkylen oder -Alkyliden ist.

Gemäß der Erfindung verwendbare Polycarbonate werden aus Bisphenolen der Formel 2

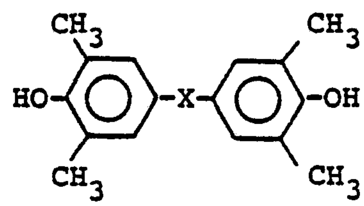

(2)

inder X die angegebene Bedeutung hat, in bekannter Weise hergestellt.

Durch Mitverwendung von Bisphenolen, die nicht unter Formel 2 fallen, werden Copolycarbonate erhalten, in denen nur ein Teil, jedoch mindestens 50 %, an Einheiten der Formel 1 enthalten ist.

Es können anstatt solcher Copolycarbonate auch Mischungen von Polycarbonaten aus Bisphenolen, die nicht unter Formel 2 fallen, verwendet werden, wenn der Gesamtgehalt der Mischung an Einheiten der Formel 1 nicht geringer als 50 % ist.

Die gemäß der Erfindung einsetzbaren Polycarbonate sind in den deutschen Offenlegungsschriften 2 063 050, 1 570 703, 2 211 956, 2 211 957, 2 248 817 und 2 615 038 beschrieben.

Bevorzugt sind Polycarbonate, die aus mindestens 75 % Struktureinheiten der Formel 1 bestehen. Besonders bevorzugt sind Polycarbonate, die nur aus Struktureinheiten der Formel 1 bestehen.

Den Polycarbonateinheiten der Formel 1 können z.B. folgende Bisphenole zugrundeliegen:

Bis-(3,5-dimethyl-4-hydroxyphenyl)-methan
(1,1-Bis-(3,5-dimethyl-4-hydroxyphenyl)-ethan
1,1-Bis-(3,5-dimethyl-4-hydroxyphenyl)-propan
2,2-Bis-(3,5-dimethyl-4-hydroxyphenyl)-propan
2,2-Bis-(3,5-dimethyl-4-hydroxyphenyl)-butan
2,4-Bis-(3,5-dimethyl-4-hydroxyphenyl)-butan
2,4-Bis-(3,5-dimethyl-4-hydroxyphenyl)-2-methylbutan
3,3-Bis-(3,5-dimethyl-4-hydroxyphenyl)-pentan.

Besonders bevorzugt ist von diesen Bisphenolen das 2,2-Bis-(3,5-dimethyl-4-hydroxyphenyl)-propan.

Beispiele für nicht unter die Formel 2 fallende Bisphenole, die zur Herstellung der Copolycarbonate bzw. zur Herstellung von Polycarbonaten aus nicht unter die Formel 2 fallende Bisphenole verwendet werden können, sind:

Hydrochinon
Resorcin
Dihydroxydiphenyle
Bis-(hydroxyphenyl)-alkane
Bis-(hydroxyphenyl)-cycloalkane
Bis-(hydroxyphenyl)-sulfide
Bis-(hydroxyphenyl)-ether
Bis-(hydroxyphenyl)-ketone
Bis-(hydroxyphenyl)-sulfoxide
Bis-(hydroxyphenyl)-sulfone
$\alpha,\alpha'$-Bis-(hydroxyphenyl)-diisopropylbenzole

sowie deren kernalkylierte und kernhalogenierte Verbindungen.

Diese und weitere geeignete aromatische Dihydroxyverbindungen sind in den US-Patentschriften 3 028 365, 2 999 835, 3 148 172, 3 271 368, 2 991 273, 3 271 367, 3 780 078, 3 014 891 und 2 999 846 und in den deutschen Offenlegungsschriften 1 570 703 und 2 615 038 beschrieben.

Bevorzugt sind:

Bis-(4-hydroxyphenyl)-sulfid
2,2-Bis-(4-hydroxyphenyl)-propan
1,1-Bis-(4-hydroxyphenyl)-cyclohexan
2,2-Bis-(3-methyl-4-hydroxyphenyl)-propan
2,2-Bis-(3,5-dichlor-4-hydroxyphenyl)-propan
2,2-Bis-(3,5-dibrom-4-hydroxyphenyl)-propan
α,α'-Bis-(4-hydroxyphenyl)-p-diisopropylbenzol und
(1,1,3,4,6-Pentamethyl-3-(3,5-dimethyl-4-hydroxyphenyl)-indan-5-ol.

Besonders bevorzugt sind:

2,2-Bis-(4-hydroxyphenyl)-propan und
1,1,3,4,6-Pentamethyl-3-(3,5-dimethyl-4-hydroxyphenyl)-indan-5-ol.

Die aromatischen Polycarbonate können durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxygruppen verzweigt sein.

Polycarbonate dieser Art sind z.B. in den deutschen Offenlegungsschriften 1 570 533, 1 595 762, 2 116 974, 2 113 347, der britischen Patentschrift 1 079 821, der US-Patentschrift 3 544 514 und in der deutschen Offenlegungsschrift 25 00 092 beschrieben.

Geeignete Verbindungen mit drei oder mehr als drei phenolischen Hydroxygruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4"-dihydroxytriphenyl-methyl)-benzol. Geeignete andere dreifunktionelle Verbindungen sind 2,4-Dihydroxybenzoesäure, Trimesinsäure, Cyanurchlorid, 3,3-Bis-(4-hydroxyphenyl)-2-oxo-2,3-dihydroindol und 3,3-Bis-(3-methyl-4-hydroxyphenyl)-2-oxo-2,3-dihydroindol.

Die Polycarbonate haben im allgemeinen Molekulargewichte von 10 000 bis 200 000, vorzugsweise von 25 000 bis 100 000, besonders bevorzugt von 20 000 bis 60 000 (gemessen durch Lichtstreuung).

Zur Herstellung der erfindungsgemäßen Polymermischungen werden 100 Gew.-Teile des Pfropfpolymerisates A mit 5 bis 30 Gew.-Teilen, vorzugsweise mit 10 bis 20 Gew.-Teilen, eines Thermoplasten B gemischt. Als thermopla-

stische Komponente B dienen die vorerwähnten aromatischen Polycarbonate oder Gemische davon, in denen bis zu 50 Gew.-% dieser Polycarbonate durch Polystyrol, Polymethylmethacrylat oder Styrol-Acrylnitril-Copolymere ersetzt sein können. Von diesen Thermoplastgemischen werden vorzugsweise solche eingesetzt, in denen der zur Abmischung mit dem Polycarbonat verwendete Thermoplast und die Pfropfäste des Pfropfpolymerisates A aus den gleichen Monomereinheiten aufgebaut sind. Die Abmischung des Pfropfpolymerisates A und des Thermoplasten B kann direkt, z.B. in einem Innenmischer, in einer Schnecke oder auf einer Walze bei 160 bis 250°C erfolgen. Ebensogut können auch Emulsionen oder Lösungen der Komponenten A und B miteinander gemischt und die resultierende Polymermischung daraus isoliert werden.

Die Wärmestandfestigkeiten der erfindungsgemäßen Polymermischunungen sind vergleichbar oder besser als die von Gemischen aus Polypropylen und Ethylen-Propylen-Terpolymeren und sind erheblich höher als die von Styrol-Butadien-Dreiblockelastomeren. Zwar kann die Wärmestandfestigkeit solcher Dreiblockelastomerer durch Abmischung mit Polycarbonaten ebenfalls verbessert werden, doch sind dafür größere Mengen Polycarbonat erforderlich. Darüber hinaus haben die erfindungsgemäßen Polymermischungen den Vorteil, daß die zugrundeliegenden Pfropfpolymerisate A leichter herstellbar sind und wegen ihrer höheren Wärmestandfestigkeit problemlos auf der Walze mit der thermoplastischen Komponente B abgemischt werden können.

Die Zugfestigkeiten der Pfropfpolymerisat-Thermoplastmischungen liegen zwischen 12 und 28 MPa, ihre (Bruch)Dehnungen zwischen 200 und 380 % und ihre Shore A-Härten bei 120°C zwischen 30 und 93. Sie überstreichen damit bei geringeren,aber für den Anwendungsbereich der thermoplastischen Elastomeren ausreichenden Dehnungen den Festigkeitsbereich der thermoplastischen Styrol-Butadien-Dreiblockelastomeren und sind in der Festigkeits-Dehnungs-Relation Abmischungen aus Polypropylen und Ethylen-Propylen-Terpolymeren überlegen, die Festigkeiten von 7 bis 16 MPa Dehnungen von 50 bis 200 % und Shore A-Härten bei 120°C von 42 bis 75 besitzen. Bei Temperaturen zwischen 160 und 250°C lassen sich die erfindungsgemäßen Polymermischungen auf der Walze einwandfrei verarbeiten. Auch die Herstellung von Formteilen im Spritzgußverfahren ist problemlos. Gegenüber herkömmlichen Kautschukvulkanisaten besitzen sie erheblich höhere Strukturfestigkeiten von bis zu 700 Newton (N) und darüber.

Die folgenden Beispiele erläutern die Erfindung. Die angegebenen Teile oder Prozente beziehen sich stets auf das Gewicht.

Beispiele

Die Pfropfpolymerisate A werden durch Emulsionspolymerisation hergestellt, durch Zugabe von 0,5 Teilen 2,6-Di-tert.-butyl-p-kresol stabilisiert, mit 2 %iger Natriumchlorid-, Magnesiumsulfat- oder Essigsäure-Lösung gefällt und bei 70°C im Vakuum getrocknet.

Zur Abmischung werden folgende Thermoplasten verwendet:

Polycarbonat (entsprechend Formel 1):
2,2-Bis-(3,5-dimethyl-4-hydroxyphenyl)propan-Polycarbonat, Molgew. ca. 38 000;

Styrol-Acrylnitril-Copolymer: 28 % Acrylnitrilgehalt, L-Wert = 75 bis 85 (in Dimethylformamid bei 25°C);

Polymethylmethacrylat: L-Wert = 30 bis 33 (Dimethylformamid, 25°C);

Polystyrol: L-Wert = 65 bis 70 (Dimethylformamid, 25°C).

Die Herstellung der erfindungsgemäßen Polymermischung erfolgt entweder

a) direkt auf einer Walze oder

b) in einer Lösung bzw. Dispersion des Pfropfpolymerisates A und des Thermoplasten B in Toluol, Benzol oder Chloroform.

Anschließend wird die Mischung sprühgetrocknet oder durch Strippen vom Lösungsmittel befreit und bei 70°C im Vakuum getrocknet und dann bei 170°C zu einem Walzfell verarbeitet.

Die mechanischen Werte der in den Beispielen beschriebenen Abmischungen werden nach DIN 53 504 bestimmt und sind in der Tabelle 1 angegeben.

Beispiel 1

Zur Herstellung des Pfropfpolymerisates wird ein Polybutadien-Latex verwendet (Feststoffgehalt 40 %, Gelgehalt größer als 90 %, Teilchengröße 400 nm) und Styrol durch Emulsionspolymerisation aufgepfropft. (Einsatzverhältnis Polybutadien zu Styrol = 55 Teile : 45 Teile, Monomerumsatz ca. 100 %). Das gefällte und getrocknete Pfropfpolymerisat wird unter Rühren zusammen mit

a) 10 Teilen Polycarbonat

b) 20 Teilen Polycarbonat

c) 10 Teilen Polycarbonat und
   10 Teilen Polystyrol

in Toluol dispergiert, die Mischung durch Strippen vom Toluol befreit und anschließend bei 170°C zu einem Walzfell verarbeitet.

Beispiel 2

Analog Beispiel 1 wird zur Pfropfung ein Polybutadienlatex mit einer Teilchengröße von 200 nm verwendet (Einsatzverhältnis Polybutadien:Styrol = 74 Teile : 26 Teile; Monomerenumsatz ca. 100 %).

Abmischung mit

a) 20 Teilen Polycarbonat
b) 10 Teilen Polycarbonat und 10 Teilen Polystyrol.

Beispiel 3

Analog Beispiel 2 (Einsatzverhältnis Polybutadien:Styrol = 64 Teile : 36 Teile; ca. 100 % Monomerenumsatz).

Abmischung mit

a) 20 Teilen Polycarbonat
b) 10 Teilen Polycarbonat und 10 Teilen Polystyrol.

Beispiel 4

Analog Beispiel 2 (Einsatzverhältnis Polybutadien:Styrol = 55 Teile : 45 Teile; ca. 100 % Monomerenumsatz).

Abmischung mit

a) 10 Teilen Polycarbonat
b) 20 Teilen Polycarbonat.

Die Abmischung wird hier auf der Walze bei 240°C vorgenommen.

Beispiel 5

Analog Beispiel 1; zur Pfropfung wird Methylmethacrylat statt Styrol verwendet.

Abmischung mit

a) 10 Teilen Polycarbonat
b) 20 Teilen Polycarbonat
c) 10 Teilen Polycarbonat und 10 Teilen Polystyrol.

Beispiel 6

Analog Beispiel 1; zur Pfropfung wird statt Styrol ein Gemisch aus 60 % Methylmethacrylat und 40 % Styrol verwendet.

Abmischung mit

a) 10 Teilen Polycarbonat, 5 Teilen Polystyrol und 5 Teilen Styrol/Acrylnitril-Harz
b) 10 Teilen Polycarbonat, 5 Teilen Polymethylmethacrylat und 5 Teilen Styrol/Acrylnitril-Harz
c) 10 Teilen Polycarbonat und 10 Teilen Polymethylmethacrylat
d) 10 Teilen Polycarbonat und 10 Teilen Styrol/Acrylnitril-Harz
e) 20 Teilen Polycarbonat.

Beispiel 7

Analog Beispiel 1; zur Pfropfung wird statt Styrol ein Gemisch aus 52 % Methylmethacrylat, 24 % Styrol und 24 % Acrylnitril verwendet.

Abmischung mit

a) 10 Teilen Polycarbonat, 5 Teilen Polystyrol und 5 Teilen Styrol/Acrylnitril-Harz
b) 10 Teilen Polycarbonat, 5 Teilen Polymethylmethacrylat und 5 Teilen Styrol/Acrylnitril-Harz
c) 10 Teilen Polycarbonat und 10 Teilen Polymethylmethacrylat
d) 10 Teilen Polycarbonat und 10 Teilen Styrol/Acrylnitril-Harz.

Beispiel 8

Analog Beispiel 1; zur Pfropfung wird statt Styrol ein Gemisch aus 68 % Methylmethacrylat und 32 % Styrol verwendet.

Abmischung mit

a) 10 Teilen Polycarbonat, 5 Teilen Polystyrol und 5 Teilen Styrol/Acrylnitril-Harz
b) 10 Teilen Polycarbonat, 5 Teilen Polymethylmethacrylat und 5 Teilen Styrol/Acrylnitril-Harz
c) 10 Teilen Polycarbonat und 10 Teilen Polymethylmethacrylat
d) 10 Teilen Polycarbonat und 10 Teilen Styrol/Acrylnitrilharz
e) 20 Teilen Polycarbonat.

Tabelle 1

| Beispiel Nr. | Festigkeit (MPa) | Dehnung (%) | Modul 100 % (MPa) | Shore A bei °C | | | | | Shore D bei °C | | Elastizität bei 23°C (%) | Strukturfestigkeit (N) |
|---|---|---|---|---|---|---|---|---|---|---|---|---|
| | | | | 23 | 70 | 100 | 120 | 150 | 23 | 70 | | |
| 1 Pfropfpolymerisat | 11,9 | 350 | 8,9 | 97 | 95 | 77 | 40 | 12 | 55 | 34 | 42 | 345 |
| 1 Mischung a) | 17,3 | 270 | 12,3 | 98 | 97 | 94 | 77 | 35 | 57 | 47 | 44 | 435 |
| 1 Mischung b) | 20,9 | 185 | 15,2 | 98 | 96 | 94 | 91 | 42 | 62 | 51 | 47 | 410 |
| 1 Mischung c) | 19,1 | 235 | 13,0 | 98 | 98 | 95 | 73 | 29 | 57 | 48 | 44 | 550 |
| 2 Pfropfpolymerisat | 2,5 | 160 | 2,2 | 70 | 62 | 49 | 40 | 27 | 21 | 9 | 44 | 60 |
| 2 Mischung a) | 5,8 | 65 | | 84 | 73 | 66 | 60 | 49 | 25 | 17 | 46 | 125 |
| 2 Mischung b) | 7,1 | 210 | 5,1 | 88 | 79 | 73 | 62 | 38 | 30 | 20 | 42 | 180 |
| 3 Pfropfpolymerisat | 5,7 | 310 | 3,2 | 91 | 78 | 57 | 45 | 28 | 34 | 24 | 34 | 147 |
| 3 Mischung a) | 11,6 | 155 | 10,1 | 95 | 92 | 84 | 75 | 54 | 45 | 31 | 39 | 335 |
| 3 Mischung b) | 9,3 | 260 | 6,7 | 94 | 87 | 78 | 66 | 41 | 40 | 28 | 37 | 255 |
| 4 Pfropfpolymerisat | 14,1 | 315 | 8,1 | 96 | 96 | 76 | 48 | 21 | 51 | 39 | 42 | 415 |

Tabelle 1 (Fortsetzung)

| | | | | | | | | | | | | |
|---|---|---|---|---|---|---|---|---|---|---|---|---|
| 4 Mischung a) | 18,6 | 290 | 13,4 | 98 | 98 | 96 | 76 | 39 | 62 | 49 | 45 | 620 |
| 4 Mischung b) | 21,5 | 225 | 16,5 | 98 | 97 | 97 | 93 | 44 | 64 | 52 | 49 | 735 |
| 5 Pfropfpolymerisat | 26,0 | 160 | 18,7 | 96 | 95 | 95 | 60 | 44 | 60 | 43 | 48 | 690 |
| 5 Mischung a) | 26,4 | 105 | 20,8 | 99 | 99 | 96 | 77 | 49 | 63 | 50 | 47 | 610 |
| 5 Mischung b) | 27,8 | 105 | 23,4 | 98 | 98 | 97 | 90 | 66 | 66 | 54 | 48 | 585 |
| 5 Mischung c) | 29,0 | 105 | 22,7 | 99 | 99 | 95 | 93 | 52 | 66 | 53 | 48 | 565 |
| 6 Pfropfpolymerisat | 18,9 | 285 | 14,1 | 98 | 95 | 86 | 51 | 37 | 58 | 46 | 42 | 635 |
| 6 Mischung a) | 23,6 | 185 | 18,8 | 97 | 95 | 95 | 74 | 46 | 63 | 53 | 46 | 645 |
| 6 Mischung b) | 25,5 | 190 | 19,0 | 96 | 95 | 94 | 72 | 46 | 64 | 52 | 47 | 575 |
| 6 Mischung c) | 24,0 | 150 | 19,0 | 97 | 96 | 92 | 66 | 39 | 64 | 52 | 44 | 500 |
| 6 Mischung d) | 23,6 | 165 | 18,2 | 97 | 96 | 94 | 66 | 38 | 64 | 52 | 44 | 480 |
| 6 Mischung e) | 25,4 | 135 | 19,3 | 98 | 96 | 95 | 78 | 54 | 64 | 52 | 45 | 385 |
| 7 Pfropfpolymerisat | 21,9 | 275 | 16,7 | 98 | 96 | 67 | 52 | 36 | 59 | 47 | 43 | 655 |

Tabelle 1 (Fortsetzung)

| | | | | | | | | | | | | |
|---|---|---|---|---|---|---|---|---|---|---|---|---|
| 7 Mischung a) | 21,9 | 185 | 17,1 | 99 | 97 | 66 | 54 | 30 | 65 | 51 | 46 | 670 |
| 7 Mischung b) | 23,2 | 185 | 19,0 | 98 | 97 | 67 | 57 | 38 | 64 | 52 | 43 | 720 |
| 7 Mischung c) | 23,2 | 150 | 19,3 | 98 | 97 | 64 | 55 | 35 | 65 | 51 | 43 | 700 |
| 7. Mischung d) | 23,4 | 200 | 18,4 | 98 | 96 | 66 | 55 | 39 | 63 | 50 | 43 | 735 |
| 8 Pfropfpolymerisat | 20,5 | 300 | 14,9 | 98 | 96 | 85 | 53 | 38 | 61 | 47 | 41 | 625 |
| 8 Mischung a) | 23,2 | 170 | 18,5 | 97 | 96 | 95 | 64 | 41 | 66 | 53 | 44 | 725 |
| 8 Mischung b) | 23,9 | 230 | 19,2 | 98 | 97 | 95 | 62 | 37 | 65 | 53 | 44 | 690 |
| 8 Mischung c) | 23,3 | 100 | 18,3 | 97 | 97 | 94 | 60 | 30 | 66 | 52 | 44 | 750 |
| 8 Mischung d) | 24,7 | 200 | 18,9 | 96 | 96 | 91 | 58 | 30 | 66 | 53 | 44 | 725 |
| 8 Mischung e) | 23,6 | 125 | 19,8 | 97 | 96 | 94 | 73 | 53 | 67 | 54 | 44 | 730 |

Patentansprüche

1) Thermoplastisch-elastomere Polymermischung aus

A 100 Gew.-Teilen eines Pfropfpolymerisates aus

1. 55 bis 70 Gew.-% mindestens eines hochvernetzten Kautschuks mit einem Gelgehalt von 80 bis 100 Gew.-% als Pfropfbasis und

2. 30 bis 45 Gew.-% eines Thermoplastanteils aus polymerisierten Einheiten von Acrylnitril, einem Vinylaromaten, einem Alkylmethacrylat oder deren Gemischen, die zu 10 bis 90 Gew.-% aufgepfropft sind, wobei die Summe von 1 und 2 100 Gew.-% beträgt, und

B 5 bis 30 Gew.-Teilen mindestens eines aromatischen Polycarbonats, dessen lineare Ketten zu mindestens 50 % aus Struktureinheiten der Formel 1 bestehen

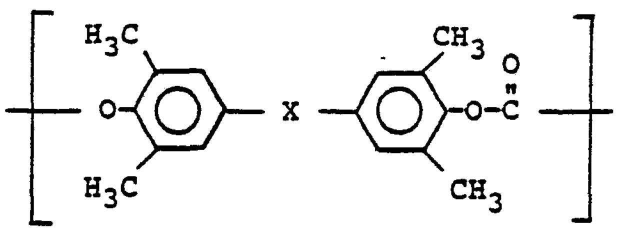

(1)

in der X für $C_1$-$C_5$-Alkylen oder -Alkyliden steht, wobei bis zu 50 Gew.-% des Polycarbonats durch Polystyrol, Polymethylmethacrylat oder Styrol-Acrylnitril-Copolymere ersetzt sein können.

2) Polymermischung nach Anspruch 1 aus

A 100 Gew.-Teilen des Pfropfpolymerisates A und

B 10 bis 20 Gew.-Teilen der thermoplastischen Komponente B.

3) Polymermischung nach Anspruch 1 und 2, dadurch gekennzeichnet, daß die Pfropfbasis aus einem Gemisch von

1. 50 bis 90 Gew.-% eines hochvernetzten Kautschuks mit einem Quellindex $< 20$ und

2. 10 bis 50 Gew.-% eines teilvernetzten Kautschuks mit einem Quellindex $> 20$ besteht.

4) Polymermischung nach Anspruch 1 bis 3, dadurch gekennzeichnet, daß das Pfropfpolymerisat A durch Aufpfropfen von Acrylnitril, Styrol, Methylmethacrylat oder deren Gemischen hergestellt wird.

5) Polymermischung nach Anspruch 1 bis 4, dadurch gekennzeichnet, daß die Pfropfbasis des Pfropfpolymerisates A aus Polybutadien besteht.

6) Polymermischung nach Anspruch 1 bis 4, dadurch gekennzeichnet, daß die Pfropfbasis aus einem Gemisch von

1. 50 bis 90 Gew.-% Polybutadien und

2. 10 bis 50 Gew.-% eines Acrylnitril-Butadien-Copolymerisats mit einem Acrylnitrilgehalt von 10 bis 40 Gew.-% besteht.

7) Polymermischung nach Anspruch 1 bis 4, dadurch gekennzeichnet, daß die Pfropfbasis aus einem Gemisch von

1. 50 bis 90 Gew.-% Polybutadien und

2. 10 bis 50 Gew.-% eines Styrol-Butadien-Copolymerisats mit einem Styrolgehalt von 10 bis 40 Gew.-% besteht.

8) Polymermischung nach Anspruch 1 bis 4, dadurch gekennzeichnet, daß die Pfropfbasis aus einem Gemisch von

1. 10 bis 90 Gew.-% eines Acrylnitril-Butadien-Copolymerisats mit einem Acrylnitrilgehalt von 10 bis 40 Gew.-% und

2. 10 bis 90 Gew.-% eines Styrol-Butadien-Copolymerisats mit einem Styrolgehalt von 10 bis 40 Gew.-% besteht.

9) Polymermischung nach Anspruch 1 bis 4, dadurch gekennzeichnet, daß das Pfropfpolymerisat A aus

1. einer Pfropfbasis aus einem Gemisch von

   a) 50 bis 90 Gew.-% Polybutadien mit einem Quellindex $< 20$ und
   b) 10 bis 50 Gew.-% Acrylnitril-Butadien- oder Styrol-Butadien-Copolymerisat mit einem Quellindex $> 20$ und

2. aufgepfropften Einheiten eines Gemisches von

   a) 10 bis 90 Gew.-% Styrol und
   b) 10 bis 90 Gew.-% Methylmethacrylat besteht.

Europäisches Patentamt

# EUROPÄISCHER RECHERCHENBERICHT

0012357

Nummer der Anmeldung
EP 79 10 4946

| EINSCHLÄGIGE DOKUMENTE | | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | DE - A - 2 717 165 (BAYER)<br>* Ansprüche *<br>-- | 1 | C 08 L 55/02 |
| | DE - A - 2 353 428 (BAYER)<br>* Ansprüche *<br>-- | 1 | |
| | DE - A - 2 259 565 (BAYER)<br>* Ansprüche *<br>-- | 1 | RECHERCHIERTE SACHGEBIETE (Int. Cl. 3) |
| | FR - A - 2 121 635 (BORG-WARNER)<br>* Ansprüche *<br>-- | 1 | C 08 L 55/02 |
| | FR - A - 1 576 422 (PECHINEY ST. BOBAIN)<br>* Zusammenfassung *<br>-- | 1 | |
| | FR - A - 1 318 121 (BORG WARNER)<br>* Zusammenfassung *<br>-- | 1 | KATEGORIE DER GENANNTEN DOKUMENTE<br>X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument<br>&: Mitglied der gleichen Patentfamilie, übereinstimmendes Dokument |
| | US - A - 3 852 393 (SHOGI FURUKAWA et al.)<br>* Ansprüche *<br>-- | 1 | |
| | FR - A - 2 249 123 (DAICEL)<br>* Ansprüche *<br>---- | 1 | |

X Der vorliegende Recherchenbericht wurde für alle Patentansprüche erstellt.

| Recherchenort | Abschlußdatum der Recherche | Prüfer |
|---|---|---|
| Den Haag | 13-03-1980 | FOUQUIER |